# EUROPÄISCHE PATENTSCHRIFT

(11) **EP 3 266 645 B1**
(45) Veröffentlichungstag und Bekanntmachung des Hinweises auf die Patenterteilung: **02.01.2019**
(21) Anmeldenummer: 17177331.0
(22) Anmeldetag: 22.06.2017
(51) Int. Cl.: B60L 11/18, B60L 15/20, B60L 7/10, B60W 10/08, B60W 10/26, G01C 21/34, B60L 7/18

(54) **VERFAHREN ZUM BETREIBEN EINES ELEKTRISCH ANGETRIEBENEN ODER AUCH ELEKTRISCH ANTREIBBAREN FAHRZEUGS SOWIE FAHRZEUG**
METHOD FOR OPERATING AN ELECTRICALLY DRIVEN OR ELECTRICALLY DRIVABLE VEHICLE AND VEHICLE
PROCÉDÉ DE FONCTIONNEMENT D'UN VÉHICULE ÉLECTRIQUE OU POUVANT ÊTRE ÉGALEMENT ÉLECTRIQUE ET VÉHICULE

(30) Priorität: 04.07.2016 DE 102016212071
(43) Veröffentlichungstag der Anmeldung: 10.01.2018
(73) Patentinhaber: AUDI AG, 85045 Ingolstadt (DE)
(72) Erfinder: Geuß, Matthias, 96149 Breitengüßbach (DE); Volkmar, Kai, 85080 Gaimersheim (DE)

(56) Entgegenhaltungen:
- DE-A1-102009 016 869
- DE-A1-102014 221 328
- GB-A- 2 515 582
- US-A1- 2015 283 919

## Beschreibung

Die vorliegende Erfindung betrifft ein Verfahren zum Betreiben eines elektrisch angetriebenen oder auch elektrisch antreibbaren Fahrzeugs sowie ein elektrisch angetriebenes oder auch elektrisch antreibbares Fahrzeug.

Für die Planung einer zeitoptimalen oder energieoptimalen Betriebsstrategie eines elektrisch angetriebenen oder auch elektrisch antreibbaren Fahrzeugs, etwa eines rein elektrisch angetriebenen Fahrzeugs (batterieelektrisches Fahrzeug (BEV)), eines hybridelektrischen Fahrzeugs (HEV) oder eines Plug-In-hybridelektrischen Fahrzeugs (PHEV)), ab Beginn einer Fahrt sind aus dem Stand der Technik verschiedene Verfahren und Systeme bekannt.

Des Weiteren sind auch diverse Verfahren und Systeme bezüglich einer Planung der optimalen Betriebsstrategie eines elektrisch angetriebenen oder auch elektrisch antreibbaren Fahrzeugs vor dem Beginn einer Fahrt bekannt.

So beschreibt etwa die DE 10 2009 052 853 A1 ein Verfahren zur Reichweitenabschätzung eines Kraftfahrzeugs über eine im Kraftfahrzeug mitgeführte und erfassbare Energiemenge, wobei von einem Fahrer vor Fahrtantritt eine Begrenzung einer maximal zulässigen Fahrgeschwindigkeit und/oder einer maximal zulässigen Beschleunigung und/oder einer maximalen Leistung für ein Komfortsystem vorgenommen wird, die das Kraftfahrzeug umgebenden Fahrstraßenprofile, insbesondere ein Höhenprofil oder eine Straßenkategorie, erfasst werden und eine Recheneinrichtung zumindest anhand der vorgenommenen Begrenzung, der erfassten Fahrstraßenprofile und der noch vorhandenen Energiemenge eine noch mögliche Reichweite errechnet und anzeigt.

Auch sind Verfahren und Systeme bezüglich einer Planung der optimalen Betriebsstrategie eines elektrisch angetriebenen oder auch elektrisch antreibbaren Fahrzeugs vor dem Beginn einer Fahrt gegebenenfalls in Verbindung mit einem vorherigen stationären Laden des elektrischen Energiespeichers dieser Fahrzeuge bekannt.

So beschreibt die DE 10 2012 209 645 A1 ein Verfahren zur Steuerung des Ladebetriebs einer einem Elektromotor zugeordneten Batterie in einem Elektro-Kraftfahrzeug, wobei ein unterhalb eines maximalen Ladezustands der Batterie liegender Zielladezustand in Abhängigkeit einer wenigstens teilweise auf einen unmittelbar bevorstehenden Betriebsabschnitt bezogenen Betriebsvorhersageinformation des Kraftfahrzeugs ermittelt wird und ein Aufladen der Batterie auf den Zielladezustand begrenzt wird.

Und aus der DE 10 2014 219 658 A1 ist ein Fahrzeug bekannt, umfassend eine Batterie mit einem Ladezustand (SOC) und einem maximalen SOC-Sollwert und mindestens eine Steuerung, die programmiert ist, die Batterie zu einem SOC-Sollwert, der von einer Differenz zwischen einem maximalen SOC-Sollwert und einer maximalen Netto-SOC-Zunahme definiert wird, die für eine erwartete Fahrzeugroute vorhergesagt wird, die ein regeneratives Ereignis zum Reduzieren des Ladestroms einschließt, welche der Batterie zugeführt wird, wenn der SOC geringer als der SOC-Sollwert ist, aufzuladen. DE102014221328 offenbart ein Verfahren zum Ermitteln einer Reichweite eines elektrisch angetriebenen Fahrzeugs, auf der Basis des Ladezustands der Traktionsbatterie.

Es ist Aufgabe der vorliegenden Erfindung, die aus dem Stand der Technik bekannten Verfahren und Fahrzeuge derart weiterzubilden, dass Vorteile erzielt werden, die mit den aus dem Stand der Technik bekannten Lösungen nicht erzielbar waren.

Diese Aufgabe wird verfahrensgemäß durch das Verfahren gemäß Anspruch 1 und vorrichtungsgemäß durch das Fahrzeug gemäß Anspruch 8 gelöst. Vorteilhafte Weiterbildungen der Erfindung sind Gegenstand der Unteransprüche.

Erfindungsgemäß wird ein Verfahren zum Betreiben eines elektrisch angetriebenen oder auch elektrisch antreibbaren Fahrzeugs (etwa eines rein elektrisch angetriebenen Fahrzeugs (batterieelektrisches Fahrzeug (BEV)), eines hybridelektrischen Fahrzeugs (HEV) oder eines Plug-In-hybridelektrischen Fahrzeugs (PHEV)) mit einem einem elektrischen Antriebsmotor des Fahrzeugs zugeordneten, wiederaufladbaren elektrischen Energiespeicher vorgeschlagen, wobei für eine als nächste Fahrt vorgesehene berechnete, eingegebene oder vorhergesagte Route ein Zielladezustand für den Energiespeicher ermittelt wird, durch den/die bei den entlang dieser Route auftretenden Verzögerungsvorgängen ein vorgebbarer Mindestanteil mittels rekuperativer Verzögerung ermöglicht wird.

Das Verfahren gemäß der vorliegenden Erfindung umfasst wenigstens einen der folgenden Schritte:
Ermitteln eines Zielladezustands für den Energiespeicher für einen unmittelbar vor Beginn der nächsten Fahrt stattfindenden stationären Lade- oder Entladevorgang des Energiespeichers unter Berücksichtigung einer berechneten, eingegebenen oder vorhergesagten, als nächste Fahrt zu befahrenden Route sowie der bei Antritt der nächsten Fahrt gegebenen, von einem vorgegebenen Normalwert abweichenden Gesamtmasse des Fahrzeugs einschließlich eines gegebenenfalls mit dem Fahrzeug verbundenen Anhängers und/oder des gegebenen, von einem vorgegebenen Normalwert abweichenden Luftwiderstandbeiwerts des Fahrzeugs, derart, dass entlang dieser Route die durch den jeweils vorgegebenen Mindestanteil an rekuperativer Verzögerung während eines jeden Verzögerungsvorgangs gewinnbare elektrische Energie vollständig oder zu einem größtmöglichen Anteil von dem Energiespeicher aufgenommen werden kann, und Aufladen oder Entladen des Energiespeichers während des stationären Lade- oder Entladevorgangs bis zum Erreichen des ermittelten Zielladezustands.

Mit der vorliegenden Erfindung wird erreicht, dass unter Berücksichtigung einer von einem Normalwert abweichenden Gesamtmasse eines Fahrzeugs (einschließlich eines gegebenenfalls mit dem Fahrzeug verbundenen Anhängers) und/oder eines von einem Normalwert abweichenden Luftwiderstandsbeiwerts bei entlang einer Route auftretenden Verzögerungsvorgängen jeweils ein vorgebbarer Mindestanteil mittels rekuperativer Verzögerung ermöglicht wird. Optional kann bei der Ermittlung des Zielladezustands auch vorgesehen sein, dass am Ende eines jeden Verzögerungsvorgangs ein vorgebbarer Ladungszustand des wiederaufladbaren elektrischen Energiespeichers gegeben ist.

Bei den aus dem Stand der Technik bekannten gattungsgemäßen Verfahren und Fahrzeugen ist keine Berücksichtigung der tatsächlich gegebenen Gesamtmasse des Fahrzeugs (einschließlich eines gegebenenfalls mit dem Fahrzeug verbundenen Anhängers) und/oder des tatsächlich gegebenen Luftwiderstandbeiwerts (oder allgemeiner ausgedrückt eines Fahrwiderstandswerts) eines Fahrzeugs vorgesehen, sondern es wird für die Ermittlung eines Zielladezustands bei einem Ladevorgang für den wiederaufladbaren elektrischen Energiespeicher lediglich von einem nicht näher definierten Zustand des Fahrzeugs ausgegangen und auf Grundlage der als nächstes zu befahrende Route ein Zielladezustand ermittelt.

Wenn jedoch bei einem elektrisch angetriebenen oder auch elektrisch antreibbaren Fahrzeug bspw. die Gesamtmasse durch Beladung, einen Anhänger und/oder durch eine auf dem Fahrzeugdach befestigte Fracht merklich von einem angenommenen "Normalwert" abweicht, ist eine nach dem Stand der Technik berechnete Betriebsstrategie nicht mehr optimal und es wird gegebenenfalls durch Rekuperation kostenlos verfügbare Energie "verschenkt". Auch ergibt sich in einem derartigen Fall der Nachteil, dass bspw. bei einer langen Bergabfahrt mit Anhänger wegen eines erhöhten Verzögerungsbedarfs die unterstützende Verzögerung durch Rekuperation wegen des vollen, d.h. noch während der Bergabfahrt bereits vollständig aufgeladenen Energiespeichers nicht zur Verfügung steht, und die "überschüssige" Energie durch eine Reibbremse "vernichtet" werden muss. Daher muss gemäß dem Stand der Technik in nachteiliger Weise sicherheitshalber die Reibbremse größer dimensioniert sein, als dies gemäß der vorliegenden Erfindung erforderlich ist.

Und wenn etwa bei einer als nächster Fahrt zu befahrenden Route ein höherer Luftwiderstandsbeiwert als ein angenommener "Normalwert" gegeben ist, etwa durch auf dem Dach des Fahrzeugs montierte Fahrräder, ohne dass sich hierdurch eine deutlich von einem "Normalwert" abweichende Gesamtmasse ergibt, kann bei einer Bergabfahrt weniger rekuperative Energie gewonnen werden, als angenommen. Bei den aus dem Stand der Technik bekannten Lösungen wird auch dieser Umstand nicht berücksichtigt, was dazu führt, dass bspw. von einem zu kleinen Zielladezustand ausgegangen wird, was nachteilig in Bezug auf die erzielbare Reichweite (ohne erneute stationäre Aufladung des wiederaufladbaren elektrischen Energiespeichers) ist, da bspw. am Ende eines Verzögerungsvorgangs (etwa einer Bergabfahrt) der wiederaufladbare Energiespeicher durch die mittels rekuperativer Verzögerung gewonnene Energie nicht vollständig aufgeladen ist.

Gemäß einer ersten vorteilhaften Weiterbildung des Verfahrens, wird bei einem mit dem Fahrzeug verbundenen, bremsbaren Anhänger während wenigstens einer Verzögerungsphase des Fahrzeugs während der nächsten Fahrt
c1) zugunsten einer niedrigeren zugfahrzeugbasierten Energierückgewinnung der Bremskraftanteil des Anhängers erhöht; und/oder
c2) zugunsten einer erhöhten zugfahrzeugbasierten Energierückgewinnung der Bremskraftanteil des Anhängers vermindert.

Ebenso ist es von Vorteil, wenn bei dem Verfahren gemäß der vorliegenden Erfindung
- das Höhenprofil der berechneten, eingegebenen oder vorhergesagten Route; und
- der Standort des Fahrzeugs zu Beginn der nächsten Fahrt für die Ermittlung des Zielladezustands berücksichtigt werden.

Weiter kann gemäß der vorliegenden Erfindung in vorteilhafter Weise für die Ermittlung des Zielladezustands berücksichtigt werden:
- die Straßenkategorie oder die Straßenkategorien entlang der berechneten, eingegebenen oder vorhergesagten Route;
- die gegebenen oder erwarteten Witterungsbedingungen während der nächsten Fahrt entlang der berechneten, eingegebenen oder vorhergesagten Route, insbesondere auch die gegebene oder erwartete Umgebungstemperatur;
- die gegebenen oder erwarteten Verkehrsbedingungen während der nächsten Fahrt entlang der berechneten, eingegebenen oder vorhergesagten Route;
- Fahrzeugeigenschaften, insbesondere ein präzidiertes Triebstrangverhalten und die Triebstranglebensdauer; und/oder
- ein Fahrstil des Fahrers und/oder Fahrerdaten.

Gemäß noch einer weiteren vorteilhaften Weiterbildung des Verfahrens können Daten zur Ermittlung der gegebenen Gesamtmasse des Fahrzeugs einschließlich eines gegebenenfalls mit dem Fahrzeug verbundenen Anhängers und/oder des gegebenen Luftwiderstandbeiwerts des Fahrzeugs
- mittels fahrzeugseitiger Sensorik erfasst, und/oder
- von einem Nutzer des Fahrzeugs mittels eine Eingabe bei einer dem Fahrzeug zugeordneten Eingabeeinrichtung eingegeben werden.

Auf Grundlage derartiger Daten kann/können gemäß der vorliegenden Erfindung die gegebene Gesamtmasse des Fahrzeugs einschließlich eines gegebenenfalls mit dem Fahrzeug verbundenen Anhängers und/oder der gegebene Luftwiderstandbeiwert des Fahrzeugs in vorteilhafter Weise
- mittels eines Berechnungsmodells
   ermittelt und/oder geschätzt werden.

Wird im Laufe der nächsten Fahrt eine Abweichung von der berechneten, eingegebenen oder vorhergesagten Route, eine Abweichung des tatsächlichen Energieverbrauchs von einem prädizierten Energieverbrauch entlang der Route, eine Änderung der durch den jeweiligen Mindestanteil an rekuperativer Verzögerung während eines jeden Verzögerungsvorgangs gewinnbaren elektrischen Energie, eine Änderung bei der gegebenen Gesamtmasse des Fahrzeugs einschließlich eines gegebenenfalls mit dem Fahrzeug verbundenen Anhängers und/oder des gegebenen Luftwiderstandbeiwerts des Fahrzeugs festgestellt, kann in vorteilhafter Weise für die Weiterfahrt eine Neuberechnung der Betriebsstrategie erfolgen, derart, dass bei den für die weiteren Routenabschnitte oder die möglichen weiteren Streckenabschnitte erforderlichen Verzögerungsvorgänge ein vorgebbarer Mindestanteil mittels rekuperativer Verzögerung möglich ist.

Von der vorliegenden Erfindung umfasst ist auch ein elektrisch angetriebenes oder auch elektrisch antreibbares Fahrzeug aufweisend:
- einen elektrischen Antriebsmotor und einen dem Antriebsmotor zugeordneten, wiederaufladbaren elektrischen Energiespeicher,
- ein Steuergerät für den Energiespeicher, das wenigstens dazu eingerichtet ist, einen Ladezustand des Energiespeichers zu ermitteln; und
- eine Navigationseinrichtung, mit der nach Eingabe eines Zielorts eine Route berechnet und/oder mit der der aktuelle Standort des Fahrzeugs ermittelt werden kann.

Das Fahrzeug gemäß der vorliegenden Erfindung ist dadurch gekennzeichnet, dass es
- weiter aufweist eine fahrzeugseitige Sensorik zur Erfassung von Daten und/oder eine dem Fahrzeug zugeordnete Eingabeeinrichtung zur Eingabe von Daten durch einen Nutzer des Fahrzeugs zur Ermittlung oder Abschätzung der gegebenen Gesamtmasse des Fahrzeugs einschließlich eines gegebenenfalls mit dem Fahrzeug verbundenen Anhängers und/oder des gegebenen Luftwiderstandbeiwerts des Fahrzeugs, und eine Recheneinrichtung, die dazu eingerichtet ist, für eine als nächste Fahrt berechnete, eingegebene oder vorhergesagte Route für den Energiespeicher einen Zielladezustand zu berechnen, mit dem/der bei den entlang der berechneten, eingegebenen oder vorhergesagten Route auftretenden Verzögerungsvorgängen jeweils ein vorgebbarer Mindestanteil an rekuperativer Verzögerung möglich ist,
- und dazu eingerichtet ist, eines der Verfahren gemäß der vorliegenden Erfindung oder eines seiner vorteilhaften Weiterbildungen und Ausgestaltungen durchführen zu können.

Die vorliegende Erfindung wird anhand der beigefügten Zeichnungen näher erläutert.

Dabei zeigen:

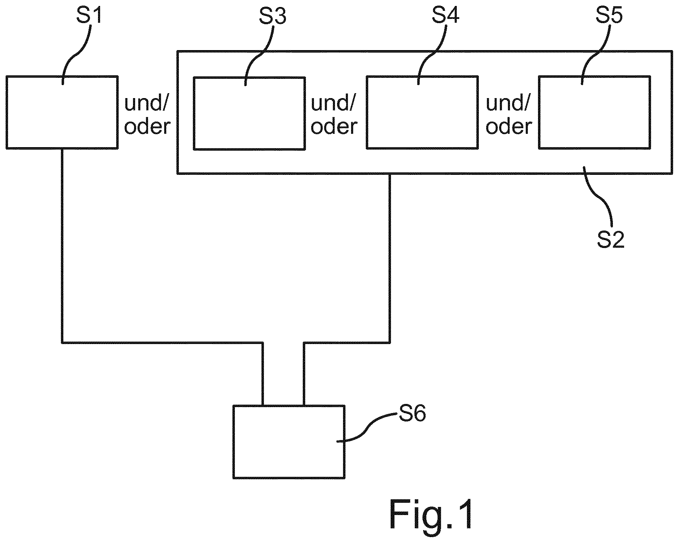

Fig. 1 ein schematisches Beispiel eines Ablaufdiagramms eines Verfahrens gemäß der vorliegenden Erfindung mit den Schritten S1 und S6;
Fig. 2 eine schematische und beispielhafte Darstellung eines elektrisch angetriebenen oder auch elektrisch antreibbaren Fahrzeugs gemäß der vorliegenden Erfindung.

Die Darstellungen in den Figuren sind rein schematisch und nicht maßstabsgerecht. Innerhalb der Figuren sind gleiche, funktionsgleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die in der obigen Beschreibung genannten Merkmale und Merkmalskombinationen sowie die in der nachfolgenden Beschreibung von Ausführungsformen, Ausführungsbeispielen und der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der vorliegenden Erfindung zu verlassen.

Ein elektrisch angetriebenes oder auch elektrisch antreibbares Fahrzeug (etwa batterieelektrisches Fahrzeug (BEV), hybridelektrisches Fahrzeug (HEV) oder Plug-In-hybridelektrisches Fahrzeug (PHEV)) wird im nachfolgenden zusammenfassend oftmals als "elektrifiziertes Fahrzeug" bzw. "elektrifizierte Fahrzeuge" bezeichnet.

Wie oben bereits erwähnt, erfolgt erfindungsgemäß die Ermittlung eines Zielladezustands für den Energiespeicher für einen unmittelbar vor Beginn der nächsten Fahrt stattfindenden stationären Lade- oder Entladevorgang des Energiespeichers unter Berücksichtigung einer berechneten, eingegebenen oder vorhergesagten, als nächste Fahrt zu befahrenden Route sowie der bei Antritt der nächsten Fahrt gegebenen, von einem vorgegebenen Normalwert abweichenden Gesamtmasse des Fahrzeugs einschließlich eines gegebenenfalls mit dem Fahrzeug verbundenen Anhängers und/oder des gegebenen, von einem vorgegebenen Normalwert abweichenden Luftwiderstandbeiwerts des Fahrzeugs, derart, dass entlang dieser Route die durch den jeweils vorgegebenen Mindestanteil an rekuperativer Verzögerung während eines jeden Verzögerungsvorgangs gewinnbare elektrische Energie vollständig oder zu einem größtmöglichen Anteil von dem Energiespeicher aufgenommen werden kann, und Aufladen oder Entladen des Energiespeichers während des stationären Lade- oder Entladevorgangs bis zum Erreichen des ermittelten Zielladezustands (S1);

Aus dem Stand der Technik sind mehrere Verfahren und Vorrichtung zur Ermittlung eines Ladezustands (SOC = state of charge) bekannt, sodass hierauf in der vorliegenden Anmeldung nicht näher eingegangen zu werden braucht. Der Fachmann kann aus den bekannten Verfahren und Vorrichtung ohne besondere Einschränkung eines zur Anwendung bei der vorliegenden Erfindung auswählen.

Elektrifizierte Fahrzeuge verfügen regelmäßig über ein Steuergerät für den bei ihnen vorhandenen wiederaufladbaren Energiespeicher, mittels dem auch der jeweils gegebene Ladezustand des wiederaufladbaren Energiespeichers ermittelt werden kann. Diese Steuergeräte können auch dazu eingerichtet sein, eine Energieabgabe von dem wiederaufladbaren Energiespeicher in ein Stromnetz (etwa ein privates Stromnetz eines Hauses, in ein öffentliches Stromnetz, in eine private oder öffentliche Speichereinrichtung für elektrischen Strom, etc.) zu steuern, wie dies bspw. aus dem Bereich des sog. "load balancing" bekannt ist. Daher kann mittels entsprechend eingerichteter Steuergeräte der wiederaufladbare Energiespeicher nicht nur bis einem Zielladezustand aufgeladen, sondern auch bis einem Zielladezustand entladen werden, sofern das elektrifizierte Fahrzeug mit einem solchen Stromnetz oder einer solchen Speichereinrichtung verbunden ist.

Da es sich bei der nächsten Fahrt um ein zukünftiges Ereignis handelt, ist es erforderlich, in geeigneter Weise die dabei zu befahrende Route "vorherzusagen". In einem einfachen Fall kann ein Nutzer des Fahrzeugs die Route etwa mittels einer fahrzeugseitigen Eingabeeinrichtung (allgemeiner ausgedrückt: bei einer Mensch-Maschine-Schnittstelle) eingegeben. Eine solche Eingabeeinrichtung kann bspw. einen berührungs- und/oder näherungsempfindlichen Bildschirm umfassen, oder einen nur anzeigenden Bildschirm und wenigstens eine Eingabeeinrichtung, bspw. in Form eines Joy-Stick, eines Dreh-Drückstellers, eine Touchpads (mit oder ohne "Maustasten"), einer Tastatur, etc. Andere/Weitere Eingabemöglichkeiten und Eingabeeinrichtungen sind selbstverständlich ebenfalls von der vorliegenden Erfindung umfasst, etwa die Eingabe mittels Sprachbefehlen, Gesten, etc. Bei einer derartigen Eingabeeinrichtung kann es sich bspw. um eine handeln, die etwa auch zur Bedienung einer dem Fahrzeug zugeordneten (auf dem Empfang und der Auswertung von Signalen von Navigations-Satelliten beruhenden) Navigationseinrichtung und/oder auch zur Bedienung von anderen fahrzeugseitigen Einrichtungen (etwa einer Multi-Media-Einrichtung, einer Klimatisierungseinrichtung, etc.) dient.

Ebenso ist es denkbar, dass ein Nutzer des Fahrzeugs für die nächste Fahrt etwa bei einer dem Fahrzeug zugeordneten Navigationseinrichtung ein Fahrziel über eine Mensch-Maschine-Schnittstelle eingibt und dann in an sich bekannter Weise von der Navigationseinrichtung eine geeignete Route berechnet wird. Werden von der Navigationseinrichtung mehreren Routen berechnet, kann vorgesehen sein, dass der Fahrer eine davon auswählen kann. Erfolgt keine solche Auswahl kann gemäß der vorliegenden Erfindung für die Ermittlung eines Zielladezustands und/oder einer Betriebsstrategie von der Route ausgegangen werden, die von der Navigationseinrichtung als die "beste" Route vorgeschlagen wird (gegebenenfalls unter Berücksichtigung von eingestellten Parametern für die Routenberechnung, bspw. unter Vermeidung von Autobahnen, gebührenpflichtigen Straßen, etc.).

Von der vorliegenden Erfindung umfasst ist auch, dass etwa aufgrund von in der Vergangenheit stattgefundenen Fahrten eine Vorhersage bezüglich der nächsten Fahrt vorgenommen wird. Entsprechende Verfahren unter Berücksichtigung von etwa Uhrzeit, Wochentag, Standort des Fahrzeugs, etc., sind aus dem Stand der Technik bekannt.

Soweit in der vorliegenden Anmeldung von einem "Normalwert" in Bezug auf die Gesamtmasse des Fahrzeugs und/oder in Bezug auf den Luftwiderstandbeiwert des Fahrzeugs gesprochen wird, so kann dieser "Normalwert" auf jede geeignete Art und Weise definiert sein. So kann etwa ein Normalwert in Bezug auf die Gesamtmasse des Fahrzeugs gebildet sein aus dem vom Hersteller angegebenen Leergewicht des Fahrzeugs plus einem vorgegebenen, zusätzlichen Gewicht, das bspw. 50 % der zulässigen Zuladung entspricht. Selbstverständlich können auch andere Werte für das zusätzliche Gewicht und andere Vorgehensweisen zur Bestimmung eines "Normalwerts" in Bezug auf die Gesamtmasse des Fahrzeugs gewählt werden. Und in Bezug auf einen Normalwert des Luftwiderstandbeiwerts kann bspw. auf den Luftwiderstandbeiwert zurückgegriffen werden, den das Fahrzeug mit einer serienmäßigen Ausstattung aufweist.

Es können "Normalwerte" für den Energieverbrauch entlang einer vorgegebenen Streckenlänge und die bei einem Verzögerungsvorgang aufgrund von rekuperativer Verzögerung gewinnbaren Menge an elektrischer Energie, wie sie sich aufgrund der "Normalwerte" für die Masse des Fahrzeugs und den Luftwiderstandsbeiwert ergeben, in einer fahrzeugseitigen Datenbank (Tabelle) hinterlegt sein. Diese "Normalwerte" können bspw. von dem Hersteller des Fahrzeugs vorgegeben sein.

Und die energiemäßigen Auswirkungen, die sich bei einem Betrieb eines elektrifizierten Fahrzeugs aufgrund einer Abweichung von einem "Normalwert" in Bezug auf die Masse des Fahrzeugs und/oder in Bezug auf den Luftwiderstandbeiwert ergeben (etwa in Bezug auf den Energiebedarf für die Zurücklegung einer vorgegebenen Streckenlänge und/oder in Bezug auf die Menge an elektrische Energie, die aufgrund eines vorgebbaren Mindestanteils an rekuperativer Verzögerung während Verzögerungsvorgängen gewinnbar ist) können ebenfalls in einer fahrzeugseitigen Datenbank (Tabelle) hinterlegt sein oder mittels geeigneter Algorithmen (etwa unter Verwendung eines Schätzalgorithmus) und/oder einer modellierenden Software zumindest annähernd genau berechnet werden.

Die vorliegende Erfindung geht davon aus, dass während der als nächste Fahrt zu befahrenden Route bei den entlang der Route auftretenden Verzögerungsvorgängen jeweils ein vorgebbarer Mindestanteil mittels rekuperativer Verzögerung ermöglicht wird, bspw. um die Reibbremse zu entlasten und/oder um die Reibbremse kleiner dimensionieren zu können, als dies ohne die vorliegende Erfindung möglich wäre.

Daher ist es wünschenswert, die bei einem jeden Verzögerungsvorgang aufgrund des jeweils vorgegebenen Mindestanteils an rekuperativer Verzögerung gewinnbare elektrische Energie während der zu befahrenden Route möglichst genau zu kennen bzw. abschätzen oder berechnen zu können. Des Weiteren ist es wünschenswert, den gesamten Energieverbrauch für eine Fahrt entlang der Route möglichst genau zu kennen bzw. abschätzen oder berechnen zu können.

Für eine solche Abschätzung oder Berechnung kann in vorteilhafter Weise zumindest
- das Höhenprofil der berechneten, eingegebenen oder vorhergesagten Route; und
- der Standort des Fahrzeugs zu Beginn der nächsten Fahrt für die Ermittlung des Zielladezustands berücksichtigt werden.

Selbstverständlich können weitere Kriterien für die Ermittlung des Zielladezustands berücksichtigt wird/werden, wie etwa
- die Straßenkategorie oder die Straßenkategorien entlang der berechneten, eingegebenen oder vorhergesagten Route;
- die gegebenen oder erwarteten Witterungsbedingungen während der nächsten Fahrt entlang der berechneten, eingegebenen oder vorhergesagten Route, insbesondere auch die gegebene oder erwartete Umgebungstemperatur;
- die gegebenen oder erwarteten Verkehrsbedingungen während der nächsten Fahrt entlang der berechneten, eingegebenen oder vorhergesagten Route;
- Fahrzeugeigenschaften, insbesondere ein präzidiertes Triebstrangverhalten und die Triebstranglebensdauer; und/oder
- ein Fahrstil des Fahrers und/oder Fahrerdaten.

Bekanntermaßen ist die Geschwindigkeit, mit der ein elektrifiziertes Fahrzeug auf einem Streckenabschnitt fährt oder fahren kann ein wichtiges Kriterium für den Energiebedarf eines elektrifizierten Fahrzeugs. Auch kann die Geschwindigkeit, mit der ein Fahrzeug in eine Gefällstrecke (bspw. eine Bergabfahrt) einfährt, den Bedarf an Verzögerung innerhalb der Gefällstrecke beeinflussen und somit auch die Menge an durch rekuperativer Verzögerung gewinnbarer (oder gegebenenfalls auch zu "vernichtender") elektrischer Energie. Die jeweils zulässige Höchstgeschwindigkeit und/oder die zu erwartende durchschnittliche Geschwindigkeit eines elektrifizierten Fahrzeugs sind bekanntermaßen auch abhängig von der Kategorie des Straßenabschnitts, auf dem sich das elektrifizierte Fahrzeug bewegt (etwa Autobahn, Landstraße, innerörtliche Straße, Spielstraße, etc.).

Die Straßenkategorie(n) können bspw. aus den, bei einer dem elektrifizierten Fahrzeug zugeordneten Navigationseinrichtung vorhandenen, digitalen Straßenkarten ausgelesen werden oder von einer fahrzeugexternen digitalen Recheneinrichtung zu dem elektrifizierten Fahrzeug übertragen werden (bspw. mittels Mobilfunk, Infrastruktur-zu-Fahrzeug-Kommunikation).

Ebenfalls einen nicht unerheblichen Einfluss auf den Energiebedarf bzw. die während Verzögerungsvorgängen gewinnbare elektrische Rekuperationsenergie eines elektrifizierten Fahrzeugs können die gegebenen oder erwarteten Witterungsbedingungen haben. So kann etwa eine Wasser- oder Schneeschicht auf der Fahrbahn den Energiebedarf pro Streckenabschnitt oder für die gesamte Fahrt im Vergleich zu einem trockenen Zustand der Fahrbahn erheblich erhöhen bzw. die durch rekuperative Verzögerung zurückgewinnbare Energie erheblich mindern. Die Auswirkungen eines stärkeren Winds auf den Energiebedarf eines elektrifizierten Fahrzeugs sind abhängig von der vorherrschenden Windrichtung in Bezug auf die jeweilige Fahrtrichtung. Bei Witterungsbedingungen, die mit Sichtbeeinträchtigungen verbunden sind, kann es erforderlich sein, dass bei dem elektrifizierten Fahrzeug auch tagsüber die Scheinwerfer und die Fahrzeugleuchten eingeschaltet sind, wodurch sich ein erhöhter Energiebedarf im Vergleich zu einem "normalen Wetter" ergibt.

Auch die Umgebungstemperatur kann einen erheblichen Einfluss auf den Energiebedarf eines elektrifizierten Fahrzeugs bei einer Fahrt ausüben, etwa wenn aufgrund einer sehr niedrigen oder sehr hohen Temperatur Komforteinrichtungen im elektrifizierten Fahrzeug, wie etwa eine Heizung oder eine Klimaanlage in Betrieb sind. Auch kann bei einer niedrigen Umgebungstemperatur eine Erwärmung der Batterie erforderlich oder wünschenswert sein. Hierdurch kann sich im Vergleich zu einer mittleren Umgebungstemperatur ein zusätzlicher Energiebedarf ergeben.

In ähnlicher Weise können auch die gegebenen oder erwarteten Verkehrsbedingungen bei der nächsten bevorstehenden Fahrt oder einer Weiterfahrt einen erheblichen Einfluss auf den Energiebedarf eines elektrifizierten Fahrzeugs ausüben. So kann bspw. ein elektrifiziertes Fahrzeug bei freien Straßen mit einer höheren (Durchschnitts)Geschwindigkeit fahren als bei einem hohen Verkehrsaufkommen, bei Stau und/oder in Baustellenbereichen.

Die gegebenen oder erwarteten Witterungsbedingungen und die gegebenen oder erwarteten Verkehrsbedingungen bei einer nächsten (bevorstehenden) Fahrt können bspw. über entsprechende Dienste, bspw. über ein Netzwerk wie das Internet bereitgestellt werden, können bspw. von einer fahrzeugseitigen Kommunikationseinrichtung (bspw. mithilfe einer Mobilfunkverbindung, Fahrzeug-zu-Infrastruktur-Kommunikation) abgefragt werden oder von einem derartigen Dienst aktiv (etwa als "Push-Service") zu der fahrzeugseitigen Kommunikationseinrichtung übertragen werden.

In Bezug auf die Fahrzeugeigenschaften, die gemäß der vorliegenden Erfindung berücksichtigt werden können, seien hier insbesondere ein präzidiertes Triebstrangverhalten und die Triebstranglebensdauer erwähnt. So können bspw. aufgrund einer zu erwartenden Temperatur des Traktionsmotors und/oder des wiederaufladbaren elektrischen Energiespeichers die Rekuperationsfähigkeiten des Fahrzeugs vermindert sein. Auch können sich aufgrund der Lebensdauer des Triebstrangs, insbesondere auch aufgrund der bereits zurückgelegten Streckenlängen, Veränderungen im Vergleich zu einem fabrikneuen Triebstrang ergeben haben, die in vorteilhafter Weise bei dem Verfahren gemäß der vorliegenden Erfindung berücksichtigt werden können.

Als weitere beispielhafte Kriterien, die gemäß der vorliegenden Erfindung berücksichtigt werden können, seien hier erwähnt der Energiebedarf von Komfortsystemen (wie etwa Radio, Klimaanlage, Heizung), der Energiebedarf von Assistenz- und Sicherheitssystemen, der Wartungszustand des elektrifizierten Fahrzeugs, dauerhafte Anbauten/Umbauten am elektrifizierten Fahrzeug (etwa ein den cw-Wert verändernder Spoiler, eine Veränderung der Karosserieform, eine Tieferlegung des Fahrwerks, etc.).

Diese Aufzählung ist nicht abschließend zu verstehen und es versteht sich, dass weitere Fahrzeugeigenschaften, insbesondere solche, die Einfluss auf den Energieverbrauch eines elektrifizierten Fahrzeugs haben oder haben können, ebenfalls bei der vorliegenden Erfindung berücksichtigt werden können. Daten der entsprechenden Fahrzeugeigenschaften, insbesondere solche, die längerfristig gültig sind, können in einer dem elektrifizierten Fahrzeug zugeordneten Speichereinrichtung, die bspw. Bestandteil einer dem elektrifizierten Fahrzeug zugeordneten Recheneinrichtung sein kann, dauerhaft gespeichert sein. Es kann vorgesehen sein, dass diese Daten gegebenenfalls von einem Fahrer oder einer Serviceeinrichtung verändert werden können.

Aus dem Stand der Technik ist an sich bereits bekannt, für diverse Fahrzeugfunktionen einen Fahrstil eines Fahrers zu berücksichtigen. Ein Fahrstil kann entweder von einem Fahrer bei einer dem elektrifizierten Fahrzeug zugeordneten Eingabeeinrichtung eingegeben werden (bspw. defensiver Fahrer, komfortbetonter Fahrer, normaler Fahrer, sportlicher Fahrer, sehr sportlicher Fahrer), der Fahrstil eines Fahrers kann aber auch aufgrund des Fahrverhaltens des Fahrers bei vorhergehenden Fahrten in an sich bekannter Weise ermittelt werden, ebenso wie gegebenenfalls auch eine Erkennung des jeweiligen Fahrers. Der eingegebene oder ermittelte Fahrstil hat einen Einfluss auf den Energiebedarf eines elektrifizierten Fahrzeugs pro Streckenabschnitt oder pro Fahrt und gegebenenfalls auch auf die aufgrund des vorgegebenen Mindestanteils an rekuperativer Verzögerung gewinnbare oder anfallende elektrische Energie (ein "vorsichtiger" Fahrer wird während einer Bergabfahrt in der Regel öfter und auch stärker bremsen als ein "sportlicher" Fahrer) und kann somit ebenfalls in vorteilhafter Weise bei der vorliegenden Erfindung berücksichtigt werden.

Des Weiteren kann von der vorliegenden Erfindung auch umfasst sein, dass ein Nutzer des elektrifizierten Fahrzeugs eingeben kann, ob er bei der nächsten Fahrt die Geschwindigkeit und/oder die Beschleunigung zugunsten einer erhöhten Reichweite einschränken möchte, also mit einem Reichweiten optimierten Fahrstil fahren möchte.

Ergänzend oder alternativ zu einem Fahrstil können auch Fahrerdaten bei der vorliegenden Erfindung berücksichtigt werden. Unterschiedliche Fahrer können neben einem unterschiedlichen Fahrstil auch ein unterschiedliches Fahrverhalten zeigen, so kann etwa von einem ersten Fahrer bekannt sein, dass er gerne Bergstrecken fährt, wohingegen von einem zweiten Fahrer bekannt sein kann, dass er Bergstrecken sofern möglich vermeidet. Als weiteres Beispiel sei ein Fahrer erwähnt, der während Dunkelheit unbeleuchtete Straßen so weit wie möglich vermeidet. Derartige Informationen können bspw. bei der Berechnung oder der Vorhersage der während des nächsten Betriebsabschnitts zu befahrenden Route berücksichtigt werden. Aufgrund sich so ergebender unterschiedlicher Routen können sich auch unterschiedliche Zielladezustände, Betriebsstrategien und/oder angenommene Zielladezustände ergeben.

Der jeweilige "Mindestanteil an rekuperativer Verzögerung" bei den Verzögerungsvorgängen kann in geeigneter Weise vorgegeben sein, etwa unter Berücksichtigung der Leistungsfähigkeit der bei dem Fahrzeug vorhandenen Reibbremse, unter Berücksichtigung der gewünschten Dimensionierung der Reibbremse und/oder unter Berücksichtigung der Kapazität des wiederaufladbaren elektrischen Energiespeichers. So kann für die während einer Fahrt entlang einer Route auftretenden Verzögerungsvorgängen als Mindestanteil, der durch eine rekuperative Verzögerung ermöglicht wird, bspw. ein Anteil von 10%, 20%, 30%, 40%, 50%, 60%, 70%, 80%, 90% oder auch 100% vorgegeben sein.

Der jeweils vorgebbare Mindestanteil muss nicht konstant sein, er kann sich auch im Laufe der Fahrt und/oder für verschiedene Streckenabschnitte entlang einer Route ändern, insbesondere für verschiedene Bergabfahrten unterschiedlich vorgegeben sein. So kann der vorgebbare Mindestanteil bspw. abhängen von dem Zustand der Reibbremse (etwa deren Temperatur), der Länge einer Bergabfahrt, der Höhe der nötigen Gesamtverzögerung (etwa unter Berücksichtigung der möglichen Verzögerung durch den Triebstrang und der Verzögerung durch die Reibbremse), Umgebungsbedingungen (bspw. die Umgebungstemperatur), etc. Auch kann bspw. vorgesehen sein, dass für Abbremsvorgänge auf ebenen oder ansteigenden Straßenabschnitten oder für nur kurze Bergabfahrten ein Mindestanteil von 0% an rekuperativer Verzögerung vorgegeben ist.

Bei dem Verfahren gemäß der vorliegenden Erfindung wird von einer "gegebenen" Gesamtmasse (einschließlich eines gegebenenfalls mit dem Fahrzeug verbundenen Anhängers) und/oder einem "gegebenen" Luftwiderstandbeiwert ausgegangen, der/die während der als nächste Fahrt zu befahrenden Route bei dem Fahrzeug gegeben sein wird oder gegeben ist/sind.

Daten zur Ermittlung der gegebenen Gesamtmasse des Fahrzeugs einschließlich eines gegebenenfalls mit dem Fahrzeug verbundenen Anhängers und/oder des gegebenen Luftwiderstandbeiwerts des Fahrzeugs können bspw.
- mittels fahrzeugseitiger Sensorik erfasst, und/oder
- von einem Nutzer des Fahrzeugs mittels eine Eingabe bei einer dem Fahrzeug zugeordneten Eingabeeinrichtung (Mensch-Maschine-Schnittstelle) eingegeben werden.

Diese Daten können die gegebene Gesamtmasse des Fahrzeugs einschließlich eines gegebenenfalls mit dem Fahrzeug verbundenen Anhängers und/oder den gegebenen Luftwiderstandbeiwert des Fahrzeugs unmittelbar enthalten. Da derartige Wert aber oftmals nicht bekannt sind, können aus den erfassten und/oder eingegebenen Daten die gegebene Gesamtmasse des Fahrzeugs einschließlich eines gegebenenfalls mit dem Fahrzeug verbundenen Anhängers und/oder der gegebene Luftwiderstandbeiwert des Fahrzeugs bspw. mittels eines Berechnungsmodells (etwa unter Verwendung eines Schätzalgorithmus, einer modellierenden Software) ermittelt und/oder geschätzt werden.

Mittels fahrzeugseitiger Sensorik kann etwa ein angekuppelter Anhänger oder auf dem Dach des elektrifizierten Fahrzeugs befestigte Fahrräder festgestellt werden. Ist bspw. eine Kommunikationsschnittstelle zwischen dem Anhänger und dem elektrifizierten Fahrzeug vorgesehen, kann über diese von einem entsprechend eingerichteten Anhänger dem elektrifizierten Fahrzeug auch das zulässige Gesamtgewicht des Anhängers und/oder der Typ des Anhängers mitgeteilt werden (bspw. ungebremster oder gebremster Anhänger). Fahrräder auf dem Dach des elektrifizierten Fahrzeugs können bspw. mittels einer Kameraeinrichtung erfasst und durch eine Bildauswertung erkannt werden. Eine auf dem Dach des elektrifizierten Fahrzeugs befestigte Gepäckträgerbasis kann bspw. durch eine Sensoreinrichtung erkannt werden, die das Eingreifen von Halteelementen in entsprechende Gegenelemente am Dach oder einer Dachreling des elektrifizierten Fahrzeugs detektiert. In ähnlicher Weise kann mittels geeigneter Sensorik festgestellt werden, welche Sitze/Sitzbänke in einem elektrifizierten Fahrzeug vorhanden sind oder nicht. Und der Beladungszustand eines elektrifizierten Fahrzeugs kann bspw. über eine entsprechende Sensorik am Fahrwerk, insbesondere bei den Federn oder den Stoßdämpfern eines elektrifizierten Fahrzeugs ermittelt werden. Auch Daten einer Sitzbelegungserkennung können für die vorliegende Erfindung verwendet werden.

Wie oben bereits erwähnt, können die "energiemäßigen" Auswirkungen, die sich bei einem Betrieb eines elektrifizierten Fahrzeugs aufgrund einer Abweichung von einem "Normalwert" in Bezug auf die Masse des Fahrzeugs und/oder in Bezug auf den Luftwiderstandbeiwert ergeben (etwa in Bezug auf den Energiebedarf für die Zurücklegung einer vorgegebenen Streckenlänge und/oder in Bezug auf die Menge an elektrische Energie, die aufgrund eines vorgebbaren Mindestanteils an rekuperativer Verzögerung während Verzögerungsvorgängen gewinnbar ist) etwa in einer fahrzeugseitigen Datenbank (Tabelle) hinterlegt sein oder mittels geeigneter Algorithmen (etwa unter Verwendung eines Schätzalgorithmus) und/oder einer modellierenden Software zumindest annähernd genau berechnet werden. Auch können Daten, die bei vorherigen Fahrten unter Abweichung von "Normalwerten" ermittelt wurden, und die etwa in einer hierfür vorgesehenen, fahrzeugseitigen Speichereinrichtung gespeichert sind, für die vorliegende Erfindung verwendet werden.

Bspw. erfordert ein ungebremster Anhänger im Vergleich zu einem gebremsten Anhänger eine höhere Bremskraft des elektrifizierten Fahrzeugs bei Verzögerungsvorgängen, etwa einer Bergabfahrt. Hierdurch erhöht sich die durch rekuperative Verzögerung "zurückgewinnbare" bzw. gegebenenfalls "zu vernichtende" Energie des Gespanns im Vergleich zum einem Solofahrzeug.

Ergänzend und/oder alternativ zu einer Erfassung von für die vorliegende Erfindung relevanten Daten mittels Sensorik können entsprechende Daten auch von einem Nutzer des elektrifizierten Fahrzeugs durch eine Eingabe bei einer dem elektrifizierten Fahrzeug zugeordneten Eingabeeinrichtung (allgemein ausgedrückt: bei einer Mensch-Maschine-Schnittstelle) eingegeben werden. Eine solche Eingabeeinrichtung kann bspw. einen berührungs- und/oder näherungsempfindlichen Bildschirm umfassen, oder einen nur anzeigenden Bildschirm und wenigstens eine Betätigungseinrichtung, bspw. in Form eines Joy-Stick, eines Dreh-Drückstellers, eine Touchpads (mit oder ohne "Maustasten"), einer Tastatur, etc. Andere/Weitere Eingabemöglichkeiten und Eingabeeinrichtungen sind selbstverständlich ebenfalls von der vorliegenden Erfindung umfasst, etwa die Eingabe mittels Sprachbefehlen, Gesten, etc.

Dauerhaft gegebene oder längerfristig gültige Parameter, wie etwa Fahrzeugeigenschaften, die gegebenenfalls für die vorliegende Erfindung berücksichtigt werden oder werden können, können auch langfristig in einer dem elektrifizierten Fahrzeug zugeordneten Speichereinrichtung gespeichert sein, wobei eine Anpassung/Veränderung der Parameter durch einen Nutzer des Fahrzeugs oder durch eine Servicestelle vorgesehen sein kann.

Bei einem nicht von der vorliegenden Erfindung umfassten Verfahren erfolgt ein Ermitteln einer Betriebsstrategie (S2) für eine berechnete, eingegebene oder vorhergesagte, als nächste Fahrt zu befahrende Route, unter Berücksichtigung der Route, der bei Antritt der nächsten Fahrt gegebenen, von einem vorgegebenen Normalwert abweichenden Gesamtmasse des Fahrzeugs einschließlich eines gegebenenfalls mit dem Fahrzeug verbundenen Anhängers und/oder des gegebenen, von einem vorgegebenen Normalwert abweichenden Luftwiderstandbeiwerts des Fahrzeugs sowie dem bei Antritt der Fahrt gegebenen Ladezustand des Energiespeichers, derart, dass entlang dieser Route bei jedem dabei auftretenden Verzögerungsvorgang ein jeweils vorgebbarer Mindestanteil mittels rekuperativer Verzögerung ermöglicht wird, wobei die Betriebsstrategie hierzu wenigstens einen der folgenden Schritte umfasst:
b1) Verbrauchen von elektrischer Energie durch wenigstens einen elektrischen Verbraucher lediglich zum Zwecke des Verbrauchs von elektrischer Energie vorausschauend oder während wenigstens einer Verzögerungsphase während der nächsten Fahrt (S3);
b2) vorausschauendes Durchführen während wenigstens einer Antriebsphase während der nächsten Fahrt von wenigstens einer Wirkungsgradverschlechternden Maßnahme beim Antriebsstrang, insbesondere beim Traktionsmotor, so dass im Vergleich mit einem Zustand ohne die wenigstens eine Wirkungsgrad-verschlechternde Maßnahme ein erhöhtes Maß an elektrischer Energie bei der wenigstens einen Antriebsphase erforderlich ist (S4); und/oder
b3) Durchführen während wenigstens eines Verzögerungsvorgangs während der nächsten Fahrt von wenigstens einer Wirkungsgradverschlechternden Maßnahme beim Antriebsstrang, insbesondere beim Traktionsmotor in seiner Eigenschaft als Generator, so dass im Vergleich mit einem Zustand ohne die wenigstens eine Wirkungsgrad-verschlechternde Maßnahme bei dem wenigstens einen Verzögerungsvorgang eine geringere Menge an durch den jeweiligen Mindestanteil an rekuperativer Verzögerung gewinnbarer elektrischer Energie entsteht (S5).

Die Schritte S3, S4 und/oder S5 werden so gewählt, dass bei den entlang der nächsten (berechneten, eingegebenen oder vorhergesagten) Route auftretenden Verzögerungsvorgängen jeweils ein vorgebbarer Mindestanteil mittels rekuperativer Verzögerung ermöglicht wird und - optional - am Ende eines jeden Verzögerungsvorgangs ein vorgebbarer Ladungszustand des wiederaufladbaren elektrischen Energiespeichers gegeben ist.

Damit ein solcher Mindestanteil an Verzögerung mittels rekuperativer Verzögerung ermöglicht ist, ist es erforderlich, dass die bei rekuperativer Verzögerung gewonnene Energie von dem wiederaufladbaren elektrischen Energiespeicher aufgenommen werden kann und/oder die bei rekuperativer Verzögerung gewonnene Energie auf andere Weise verbraucht und/oder verringert werden kann. Dementsprechend sind gemäß den Schritten b1) bis b3) (S3 bis S5) hierzu dienliche Verfahrensschritte vorgesehen.

So ist gemäß Schritt b1) (S3) vorgesehen, dass vorausschauend oder während wenigstens einer Verzögerungsphase des Fahrzeugs während der Fahrt elektrische Energie durch wenigstens einen elektrischen Verbraucher lediglich zum Zwecke des Verbrauchs von elektrischer Energie verbraucht wird.

Bei dem "elektrischen Verbraucher" kann es sich um einen handeln, der nicht für den "normalen" Betrieb des elektrifizierten Fahrzeugs vorgesehen ist, bspw. um eine (Hochvolt-)Widerstandsheizung, die ausschließlich dafür vorgesehen ist, "überschüssige" elektrische Energie in Wärmeenergie umzuwandeln, wobei diese Wärmeenergie nicht zur Erwärmung des Fahrzeuginnenraums oder anderer Fahrzeugkomponenten verwendet wird, sondern möglichst vollständig in die Umgebung des Fahrzeugs abgegeben wird.

Bei dem "elektrischen Verbraucher" kann es sich aber auch um einen handeln, der im Rahmen eines "normalen" Betriebs Verwendung findet, etwa eine Heizeinrichtung für den Fahrzeuginnenraum, eine Klimatisierungseinrichtung, eine Scheinwerfereinrichtung, etc. Um bspw. im Falle einer Heizeinrichtung für den Fahrzeuginnenraum den Komfort des Fahrers und der weiteren Insassen des elektrifizieren Fahrzeugs sicherzustellen, sollte die Energie bevorzugt nicht mit großer Höhe und in kurzer Zeit "vernichtet" werden, sondern bereits vorausschauend über einen längeren Zeitraum mit kleiner Höhe. Hierbei ist eine optimierte Verwendung der anfallenden Leistung vorteilhaft, bspw. zur Konditionierung des Fahrzeuginnenraums oder der Antriebskomponenten.

Gemäß Schritt b2) (S4) kann als eine weitere, dienliche Maßnahme vorausschauend während wenigstens einer Antriebsphase (einem Antriebsvorgang) beim Antriebsstrang, insbesondere beim Traktionsmotor wenigstens eine Wirkungsgrad-verschlechternde Maßnahme durchgeführt werden, so dass im Vergleich mit einem Zustand ohne die wenigstens eine Wirkungsgrad-verschlechternde Maßnahme ein erhöhtes Maß an elektrischer Energie bei der wenigstens einen Antriebsphase erforderlich ist. Eine solche Wirkungsgrad-verschlechternde Maßnahme kann bspw. das Erzeugen eines Wirbelstroms umfassen und/oder das Betreiben des Traktionsmotors in einem von einem optimalen Wirkungsgrad abweichenden (etwa sehr niedrigen oder sehr hohen) Drehzahlbereich, was etwa durch das Vorsehen eines entsprechend eingerichteten Schaltgetriebes ermöglicht wird.

Und als dritte Maßnahme, die alternativ oder ergänzend zu einer der beiden vorher erwähnten Maßnahmen ergriffen werden kann, kann gemäß Schritt b3) (S5) während wenigstens eines Verzögerungsvorgangs während der nächsten Fahrt beim Antriebsstrang, insbesondere beim Traktionsmotor in seiner Eigenschaft als Generator wenigstens eine Wirkungsgrad-verschlechternde Maßnahme durchgeführt werden (wobei die Wirkungsgrad-verschlechternde(n) Maßnahme(n) denjenigen entsprechen können, die im vorstehenden Absatz erwähnt sind), so dass im Vergleich mit einem Zustand ohne die wenigstens eine Wirkungsgrad-verschlechternde Maßnahme bei dem wenigstens einen Verzögerungsvorgang eine geringere Menge an durch den jeweiligen Mindestanteil an rekuperativer Verzögerung gewinnbarer elektrischer Energie entsteht.

Bezüglich der erwähnten Maßnahmen gemäß wenigstens einem der Schritte b1) bis b3) wird versucht, eine Maßnahme oder eine Kombination aus zwei oder mehr der Maßnahmen bezüglich des Zeitpunkts, der Zeitdauer und ihrer Höhe so zu wählen, dass bei den entlang der Route auftretenden Verzögerungsvorgängen jeweils ein vorgebbarer Mindestanteil mittels rekuperativer Verzögerung ermöglicht wird und - optional - am Ende eines jeden Verzögerungsvorgangs ein vorgebbarer Ladungszustand des wiederaufladbaren elektrischen Energiespeichers gegeben ist.

Hierbei kann vorgesehen sein, dass die gemäß der Schritte b1) bis b3) möglichen Maßnahmen mit einer unterschiedlichen Priorität ergriffen werden. So kann bspw. der Verbrauch an elektrischer Energie von einer Heizeinrichtung, die der Erwärmung des Innenraums des Fahrzeugs dient (gemäß Schritt b1)), nicht beliebig angehoben werden, ohne den Komfort der Insassen zu beeinträchtigen. Vor diesem Hintergrund kann vorgesehen sein, dass als vorrangige Maßnahme eine solche gemäß Schritt b2) und/oder b3) ergriffen wird, und nur dann, wenn dies laut Berechnung oder Abschätzung des Zielladezustands/der Betriebsstrategie nicht ausreichend ist, zusätzlich eine Maßnahme gemäß Schritt b1) ergriffen wird, wobei hier bspw. im Hinblick auf den Komfort der Insassen etwa eine Heizeinrichtung möglichst früh eingeschaltet und mit nur möglichst kleiner Leistung betrieben wird.

Der optional vorgesehene "vorgebbare Ladungszustand" am Ende eines jeden Verzögerungsvorgangs beträgt in bevorzugter Weise 100 %, d.h. dass am Ende eines jeden Verzögerungsvorgangs der wiederaufladbare elektrische Energiespeicher bevorzugt vollständig aufgeladen ist. Es kann jedoch auch ein hiervon abweichender Wert für den "vorgebbaren Ladungszustand" vorgegeben sein oder nach wenigstens einigen der Verzögerungsvorgänge - bedingt etwa durch den Verlauf der Route - erforderlich sein.

Ergänzend zu den erfindungsgemäßen Schritten kann gemäß der vorliegenden Erfindung vorgesehen sein, dass bei einem mit dem Fahrzeug verbundenen, bremsbaren Anhänger während wenigstens einer Verzögerungsphase des Fahrzeugs während der nächsten Fahrt
c1) zugunsten einer niedrigeren zugfahrzeugbasierten Energierückgewinnung der Bremskraftanteil des Anhängers erhöht wird; und/oder
c2) zugunsten einer erhöhten zugfahrzeugbasierten Energierückgewinnung der Bremskraftanteil des Anhängers vermindert wird.

Die oben erwähnte Option c2) kann bspw. dann angewandt werden, wenn während der Fahrt entlang der nächsten Route festgestellt wird, dass eine geringere Menge an elektrischer Energie durch rekuperative Verzögerung als prädiziert gewonnen wird und/oder ein höherer Energieverbrauch bei den Straßenabschnitten ohne Verzögerung als prädiziert benötigt wird. Durch diese Option kann somit erreicht werden, dass trotz der von der Vorhersage abweichenden Situation am Ende eines jeden Verzögerungsvorgangs ein vorteilhafter oder vorgebbarer Ladungszustand des wiederaufladbaren elektrischen Energiespeichers gegeben ist oder doch zumindest annähernd erreicht wird.

Für einen Fachmann auf dem vorliegenden Gebiet ist bezüglich der Option der Beeinflussung des Bremskraftanteils eines Anhängers offensichtlich, dass hierfür eine entsprechende Steuerungsmöglichkeit der Bremsanlage des Anhängers, eine entsprechend Steuereinrichtung beim elektrifizierten Fahrzeug und eine Kommunikationsschnittstelle zwischen dem elektrifiziertem Fahrzeug und dem Anhänger vorzusehen ist.

Wird das oben beschriebene, nicht von der vorliegenden Erfindung umfasste Verfahren durchgeführt, kann - wie oben bereits erwähnt - in einem Vorverfahren für einen unmittelbar vor Beginn der nächsten Fahrt stattfindenden stationären Lade- oder Entladevorgang des wiederaufladbaren elektrischen Energiespeichers unter Berücksichtigung einer berechneten, eingegebenen oder vorhergesagten, als nächste Fahrt zu befahrenden Route, eines vorgegebenen Normalwerts für die Masse des Fahrzeugs und/oder eines vorgegebenen Normalwerts für den Luftwiderstandbeiwert des Fahrzeugs ein angenommener Zielladezustand ermittelt werden, derart, dass unter Annahme des Normalwerts/der Normalwerte bei der Fahrt entlang der Route die durch den jeweiligen Mindestanteil an rekuperativer Verzögerung während eines jeden Verzögerungsvorgangs gewinnbare elektrische Energie von dem Energiespeicher vollständig oder zu einem größtmöglichen Anteil aufgenommen werden kann, und Aufladen oder Entladen des Energiespeichers während des stationären Lade- oder Entladevorgangs bis zum Erreichen des angenommenen Zielladezustands.

Hierdurch kann auch ohne Kenntnis der tatsächlich gegebenen Gesamtmasse des Fahrzeugs (gegebenenfalls einschließlich eines mit dem Fahrzeug verbundenen Anhängers) und/oder des tatsächlich gegebenen Luftwiderstandsbeiwerts zu Beginn der Fahrt entlang der nächsten Route oftmals nach Beendigung des Lade- oder Entladevorgangs ein "halbwegs passender" Ladezustand erreicht werden, wodurch der weitere Schritt/die weiteren Schritte des nicht von der vorliegenden Erfindung umfassten Verfahrens "moderater" ausfallen kann/können, als bei einem "willkürlichen" Ladezustand zu Beginn der Fahrt entlang der nächsten Route.

Wird im Laufe der nächsten Fahrt eine Abweichung von der berechneten, eingegebenen oder vorhergesagten Route, eine Abweichung des tatsächlichen Energieverbrauchs von dem prädizierten Energieverbrauch entlang der Route, eine Änderung der durch den jeweiligen Mindestanteil an rekuperativer Verzögerung während eines jeden Verzögerungsvorgangs gewinnbaren elektrischen Energie, eine Änderung bei der gegebenen Gesamtmasse des Fahrzeugs einschließlich eines gegebenenfalls mit dem Fahrzeug verbundenen Anhängers und/oder des gegebenen Luftwiderstandbeiwerts des Fahrzeugs festgestellt, kann in vorteilhafter Weise für die Weiterfahrt eine Neuberechnung der Betriebsstrategie erfolgen, derart, dass bei den für die weiteren Routenabschnitte oder die möglichen weiteren Streckenabschnitte erforderlichen Verzögerungsvorgänge ein vorgebbarer Mindestanteil mittels rekuperativer Verzögerung möglich ist.

Bei einer Abweichung von einer berechneten, eingegebenen oder vorhergesagten Route bei der nächsten Fahrt ergibt sich naturgemäß einer Unsicherheit dahin, welche weiteren Straßen oder Straßenabschnitte der Fahrer im weiteren Verlauf der Fahrt befahren wird. Daher kann gemäß der vorliegenden Erfindung vorgesehen sein, dass die Betriebsstrategie im Hinblick auf eine weitere "wahrscheinliche" Route neu berechnet wird, oder im Hinblick auf die Straßen und Straßenabschnitte die sich in einem vorgebbaren Umkreis um den aktuellen Standort des elektrifizierten Fahrzeugs befinden. Der "vorgebbare Umkreis" kann etwa von einem Fahrer mittels der oben erwähnten Eingabeeinrichtung eingegeben werden. Der "vorgebbare Umkreis" kann sich auch an der durchschnittlichen Reichweite orientieren, die das elektrifizierte Fahrzeug mit einem vollständig aufgeladenen, wiederaufladbaren Energiespeicher zurücklegen kann oder an der durchschnittlichen Reichweite, die das elektrifizierte Fahrzeug aufgrund der aktuellen im wiederaufladbaren Energiespeicher vorhandenen und entnehmbaren Energie zurücklegen kann.

Stehen innerhalb des vorgegebenen Umkreises mehrere Straßen zur Verfügung, ergibt sich naturgemäß eine weitere Unsicherheit dahin, welche der möglichen Straßen innerhalb des vorgegebenen Umkreises ein Fahrer bei seiner Weiterfahrt tatsächlich befahren wird. Dies kann gegebenenfalls bei der Neuberechnung der Betriebsstrategie durch Einbeziehung entsprechender Sicherheitszu- und/oder -abschläge berücksichtigt werden.

Von einer Route, den Straßen und Straßenabschnitten in einem vorgebbaren Umkreis um den aktuellen Umkreis um das elektrifizierten Fahrzeug sind die Höhenprofile aufgrund der Straßendaten bekannt, die etwa bei einer dem elektrifizierten Fahrzeug zugeordneten Navigationseinrichtung vorhanden sind oder auf die die Navigationseinrichtung Zugriff hat.

Sowohl die Überprüfung, ob wenigstens eine der oben erwähnten Abweichungen von einer Vorhersage gegeben ist, als auch die gegebenenfalls erforderliche oder wünschenswerte Neuberechnung der Betriebsstrategie kann in jedem geeigneten Zeitabstand durchgeführt werden, bspw. kontinuierlich oder nach vorgebbaren Zeitabständen.

Das Verfahren gemäß der vorliegenden Erfindung sowie deren vorteilhaften Weiterbildungen und Ausgestaltungen können extrem flexibel angewandt werden, bspw. im Zusammenhang mit einem Aufladen oder Entladen eines einem elektrifizierten Fahrzeug zugeordneten wiederaufladbaren Energiespeichers, unabhängig von einem Auf- oder Entladen vor einer geplanten Fahrt, aber auch während einer bereits laufenden Fahrt.

Bei dem Verfahren gemäß der vorliegenden Erfindung sowie deren vorteilhaften Weiterbildungen und Ausgestaltungen kann selbstverständlich auch berücksichtigt werden, dass am Ende einer Fahrt entlang der nächsten Route der wiederaufladbare Energiespeicher entladen ist oder einen anderen vorgegebenen Ladzustand aufweist.

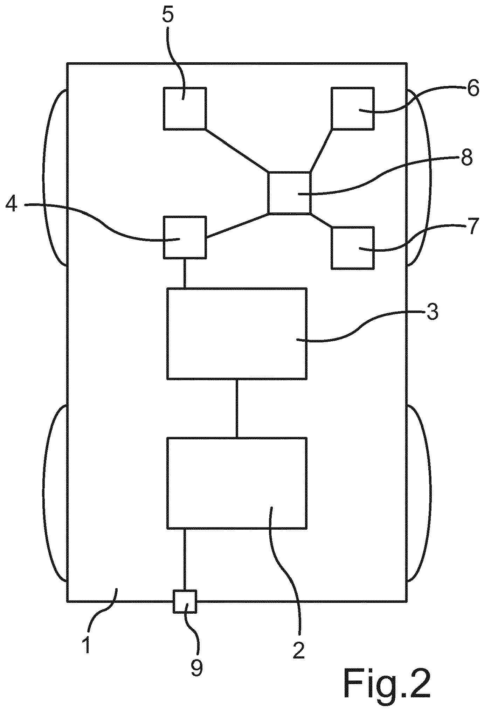

Wie in Fig. 2 schematisch, nicht maßstabsgerecht und rein beispielhaft dargestellt ist, weist ein elektrisch angetriebenes oder auch elektrisch antreibbares Fahrzeug 1 gemäß der vorliegenden Erfindung auf:
- einen elektrischen Antriebsmotor 2 und einen dem Antriebsmotor 2 zugeordneten, wiederaufladbaren Energiespeicher 3,
- ein Steuergerät 4 für den wiederaufladbaren Energiespeicher 3, das wenigstens dazu eingerichtet ist, einen Ladezustand des wiederaufladbaren Energiespeichers 3 zu ermitteln; und
- eine Navigationseinrichtung 7, mit der nach Eingabe eines Zielorts eine Route berechnet und/oder mit der der aktuelle Standort des Fahrzeugs 1 ermittelt werden kann.

Das Fahrzeug 1 gemäß der vorliegenden Erfindung ist dadurch gekennzeichnet, dass es weiter aufweist
- eine fahrzeugseitige Sensorik 5 zur Erfassung von Daten und/oder eine dem Fahrzeug 1 zugeordnete Eingabeeinrichtung 6 zur Eingabe von Daten durch einen Nutzer des Fahrzeugs zur Ermittlung oder Abschätzung der gegebenen Gesamtmasse des Fahrzeugs einschließlich eines gegebenenfalls mit dem Fahrzeug verbundenen Anhängers und/oder des gegebenen Luftwiderstandbeiwerts des Fahrzeugs, und
- eine Recheneinrichtung (8), die dazu eingerichtet ist, für eine als nächste Fahrt berechnete, eingegebene oder vorhergesagte Route für den Energiespeicher einen Zielladezustand zu berechnen, mit dem/der bei den entlang der berechneten, eingegebenen oder vorhergesagten Route auftretenden Verzögerungsvorgängen jeweils ein vorgebbarer Mindestanteil an rekuperativer Verzögerung möglich ist.

Das elektrifizierte Fahrzeug 1 gemäß der vorliegenden Erfindung kann selbstverständlich weitere Einrichtungen aufweisen, wie etwa wenigstens eine (nicht dargestellte) Reibbremse, einen Anschluss 9 mit dem der wiederaufladbare Energiespeicher 3 mit einer Ladestation, einem öffentlichen oder privaten Stromnetz, einer öffentlichen oder privaten Speichereinrichtung für elektrischen Strom angeschlossen werden kann. Alternativ oder ergänzend hierzu kann das elektrifizierte Fahrzeug 1 für ein induktives Aufladen und Entladen des wiederaufladbaren Energiespeichers 3 eingerichtet sein. Ebenso können weitere Einrichtungen vorhanden sein, wie bspw. eine digitale Recheneinrichtung zur Berechnung oder Abschätzung der gegebenen Gesamtmasse, des gegebenen Luftwiderstandsbeiwerts des Fahrzeugs und/oder der "energiemäßigen" Auswirkungen davon, eine Verbrennungskraftmaschine (bei einem nicht rein elektrisch angetriebenen Fahrzeug 1).

Das elektrifizierte Fahrzeug 1 gemäß der vorliegenden Erfindung ist weiter dazu eingerichtet, eines der Verfahren gemäß der vorliegenden Erfindung oder eines seiner vorteilhaften Weiterbildungen ausführen zu können. Hierzu ist das Fahrzeug 1 selbstverständlich mit allen hierfür erforderlichen Einrichtungen zu versehen bzw. weist das Fahrzeug 1 alle hierfür erforderlichen Einrichtungen auf.

Die vorliegende Erfindung soll nachfolgend durch ein Beispiel und ein Vergleichsbeispiel noch näher erläutert werden:
Hierbei wird von folgender, für beide Beispiele zutreffenden Ausgangssituation ausgegangen: Ein elektrifiziertes Fahrzeug 1 befindet sich auf einem Berg oder einer Anhöhe und der wiederaufladbare elektrische Energiespeicher 3 kann stationär geladen werden. Das elektrifizierte Fahrzeug 1 wird vor Beginn der nächsten bevorstehenden Fahrt mit einem Anhänger verbunden.

Die nächste bevorstehende Fahrt wird eine lange Bergabfahrt enthalten. Während der gesamten Bergabfahrt muss ein vorgebbarer Mindestanteil der dabei auftretenden Verzögerungsvorgänge mittels rekuperativer Verzögerung möglich sein, um die Reibbremse zu entlasten.

### Beispiel:

Der Anhänger wird an dem elektrifizierten Fahrzeug 1 angehängt und vom elektrifizierten Fahrzeug 1 bzw. von einer fahrzeugseitigen Sensorik 5 erkannt; alternativ hierzu kann der Fahrer dem elektrifizierten Fahrzeug 1 "mitteilen" (etwa über die Eingabeeinrichtung 6), dass das elektrifizierte Fahrzeug 1 mit einem Anhänger verbunden ist oder vor der nächsten bevorstehenden Fahrt mit dem Anhänger verbunden werden wird. Ebenso ist dem elektrifizierten Fahrzeug 1 der Verlauf als nächste Fahrt zu befahrende Route bekannt (bspw. durch eine Eingabe des Fahrers bei der Navigationseinrichtung 7).

Das elektrifizierte Fahrzeug 1 wird mit einer Ladestation, einem Stromnetz oder einer Speichereinrichtung für elektrischen Strom verbunden und der wiederaufladbare elektrische Energiespeicher 3 wird unter Berücksichtigung der zusätzlichen Masse des Anhängers so weit aufgeladen oder so weit entladen (jeweils bis zum berechneten oder abgeschätzten Zielladezustand), dass entlang dieser Route die durch den jeweils vorgegebenen Mindestanteil an rekuperativer Verzögerung während eines jeden Verzögerungsvorgangs gewinnbare elektrische Energie vollständig oder zu einem größtmöglichen Anteil von dem Energiespeicher aufgenommen werden kann.

Bei einer ausreichenden Kapazität des wiederaufladbaren elektrischen Energiespeichers (und einem geeigneten Verlauf der Route) kann in diesem Fall vorgesehen sein, dass die Verzögerungsvorgänge entlang der Route vollständig mittels rekuperativer Verzögerung durchgeführt werden und die dabei gewonnene elektrische Energie auch vollständig von dem wiederaufladbaren elektrischen Energiespeicher aufgenommen wird.

Reicht die Kapazität des wiederaufladbaren elektrischen Energiespeichers hierzu nicht aus, kann ergänzend zu einer Aufnahme von mittels rekuperativer Verzögerung gewonnener elektrischer Energie durch den wiederaufladbaren elektrischen Energiespeicher eine oder mehrere der Maßnahmen gemäß b1) bis b3) (S3 bis S5) ergriffen werden, um "überschüssige" elektrische Energie zu vernichten oder erst gar nicht entstehen zu lassen. In einem solchen Fall kann es weiterhin möglich sein, dass die Verzögerungsvorgänge entlang der Route vollständig mittels rekuperativer Verzögerung durchgeführt werden.

Erst wenn auch die im vorstehenden Absatz erwähnte Kombination an Maßnahmen es nicht mehr ermöglicht, die Verzögerungsvorgänge entlang der Route vollständig mittels rekuperativer Verzögerung durchzuführen, müssen bei einzelnen, mehreren oder allen Verzögerungsvorgängen der Anteil an Verzögerung mittels rekuperativer Verzögerung auf kleiner 100% gesenkt werden (bis hin zum vorgegebenen Mindestanteil; wobei der vorgegebene Mindestanteil - wie oben bereits erwähnt - bei den verschiedenen Verzögerungsvorgängen unterschiedlich vorgegeben sein kann) und der verbleibende Rest an erforderlicher Verzögerung von der Reibbremse übernommen werden. Selbst bei diesem nicht optimalen Szenario erfolgt stets eine vorteilhafte Entlastung der Reibbremse.

### Vergleichsbeispiel:

Der Anhänger wird vor dem stationären Laden nicht angehängt und der Fahrer teilt dem elektrifizierten Fahrzeug 1 auch nicht mit, dass er diesen nach dem Laden anhängen wird. In einem solchen Fall kann in an sich bekannter Art und Weise der wiederaufladbare Energiespeicher 3 des elektrifizierten Fahrzeugs 1 nur unter Annahme eines "Normalwerts" für die Gesamtmasse des Fahrzeugs und/oder eines "Normalwerts" für den Luftwiderstandbeiwerts bis zu einem angenommenen Ladezustand aufgeladen werden, d.h. unter Berücksichtigung der geplanten Route aber ohne Berücksichtigung des Anhängers, also unter der Annahme eines "normalen" Energieverbrauchs und eines "normalen" rekuperativen Energierückgewinnungsverhaltens des elektrifizierten Fahrzeugs 1.

Dieser "angenommene Ladezustand" ist hierbei so gewählt, dass bei dem angenommenen durchschnittlichen Verhalten des Fahrzeugs 1 während der gesamten Bergabfahrt bei den dabei erforderlichen Verzögerungsvorgängen jedenfalls ein Mindestanteil mittels Rekuperation erfolgen könnte.

Zu Beginn der Fahrt wird der Anhänger mit dem elektrifizierten Fahrzeug 1 verbunden, was durch eine fahrzeugseitige Sensorik 5 erkannt wird. Alternativ oder ergänzend hierzu kann das Vorhandensein eines mit dem Fahrzeug verbundenen Anhängers dem Fahrzeug auch durch eine Nutzereingabe mitgeteilt werden. Durch die erhöhte notwendige Bremskraft bei Bergabfahrt würde der wiederaufladbare Energiespeicher 3 des elektrifizierten Fahrzeugs 1 schon vor Ende der Abfahrt durch Rekuperation vollständig aufgeladen sein. Daher "vernichtet" das elektrifizierte Fahrzeug 1 durch wenigstens eine der Maßnahmen gemäß der Schritte b1) bis b3) von Anspruch 1 und/oder Schritt c1) von Anspruch 2 genau so viel Energie, dass bei den entlang der Route auftretenden Verzögerungsvorgängen jeweils ein vorgebbarer Mindestanteil mittels rekuperativer Verzögerung ermöglicht wird.

Ergänzend kann bei jedem der beiden erwähnten Beispiele als Zielvorgabe angestrebt sein, dass am Ende wenigstens einer Bergabfahrt (falls die Route nur eine Bergabfahrt aufweist, am Ende der Bergabfahrt) der wiederaufladbare Energiespeicher 3 vollgeladen ist, um eine möglichst große Reichweite für die Weiterfahrt zu erzielen.

Das vorstehend angegebene Beispiel dient lediglich der näheren Erläuterung der vorliegenden Erfindung. Die vorliegende Erfindung ist selbstverständlich nicht auf dieses Beispiel beschränkt. Vielmehr ergibt sich der Schutzumfang der vorliegenden Erfindung durch die nachfolgenden Ansprüche, wobei die Beschreibung und die Zeichnungen zur Auslegung der Patentansprüche heranzuziehen sind.

Die für das elektrifizierte Fahrzeug 1 gemäß der vorliegenden Erfindung erforderlichen Einrichtungen, Vorrichtungen, Bauteile, Hard- und Software-Komponenten sowie deren mögliches und vorteilhaftes Zusammenwirken sind einem Fachmann bekannt, so dass in dieser Anmeldung hierauf nicht näher eingegangen zu werden braucht.

Die vorliegende Erfindung ermöglicht die Bereitstellung einer optimalen Betriebsstrategie für ein elektrisch angetriebenes (batterieelektrisches Fahrzeug (BEV)) oder auch elektrisch angetriebenes Fahrzeug (bspw. hybridelektrisches Fahrzeug (HEV) oder Plug-In-hybridelektrisches Fahrzeug (PHEV)), für die nächste Fahrt unter maximaler Energieaufnahme durch den bei dem Fahrzeug vorgesehenen wiederaufladbaren elektrischen Energiespeicher (bspw. Traktionsbatterie(n), Superkondensator(en)) und unter Berücksichtigung der Sicherstellung rekuperativer Verzögerung einer erforderlichen oder gewünschten Höhe, falls für bestimmte Streckenabschnitte entlang der Route erforderlich, gegebenenfalls in Verbindung mit einem vorherigen stationären Laden oder Entladen des wiederaufladbaren elektrischen Energiespeichers.

So kann nach einem vorhergehenden Laden oder Entladen des wiederaufladbaren elektrischen Energiespeichers auf einen Zielladezustand eine "Rekuperationsstrategie" für die nächste Fahrt ermittelt werden, unter Einhaltung einer "Mindestrekuperation" (bspw. um die Reibbremse zu unterstützen), falls eine Verzögerung durch den Triebstrang in der nächsten Fahrt an einer oder mehreren Stellen (bspw. bei einer Bergabfahrt) erforderlich oder gewünscht ist.

Durch die vorliegende Erfindung kann insbesondere eine kleinere Dimensionierung der Reibbremse erreicht werden, als dies bei elektrifizierten Fahrzeugen nach dem Stand der Technik möglich ist, da die unterstützende Verzögerung durch jedenfalls ein Mindestmaß an Rekuperation sichergestellt ist, sofern diese für bestimmte Streckenabschnitte erforderlich ist. Hierdurch ergibt sich auch eine vorteilhafte Material- und Gewichtseinsparung im Vergleich zum vorbekannten Stand der Technik.

## Patentansprüche

1. Verfahren zum Betreiben eines elektrisch angetriebenen oder auch elektrisch antreibbaren Fahrzeugs (1) mit einem einem elektrischen Antriebsmotor (2) des Fahrzeugs (1) zugeordneten, wiederaufladbaren elektrischen Energiespeicher (3), wobei für eine als nächste Fahrt vorgesehene berechnete, eingegebene oder vorhergesagte Route ein Zielladezustand für den Energiespeicher (3) ermittelt wird (S6), durch den bei den entlang dieser Route auftretenden Verzögerungsvorgängen ein vorgebbarer Mindestanteil mittels rekuperativer Verzögerung ermöglicht wird, umfassend:
Ermitteln eines Zielladezustands für den Energiespeicher (3) für einen unmittelbar vor Beginn der nächsten Fahrt stattfindenden stationären Lade- oder Entladevorgang des Energiespeichers (3) unter Berücksichtigung einer berechneten, eingegebenen oder vorhergesagten, als nächste Fahrt zu befahrenden Route sowie der bei Antritt der nächsten Fahrt gegebenen, von einem vorgegebenen Normalwert abweichenden Gesamtmasse des Fahrzeugs (1) einschließlich eines gegebenenfalls mit dem Fahrzeug (1) verbundenen Anhängers und/oder des gegebenen, von einem vorgegebenen Normalwert abweichenden Luftwiderstandbeiwerts des Fahrzeugs (1), derart, dass entlang dieser Route die durch den jeweils vorgegebenen Mindestanteil an rekuperativer Verzögerung während eines jeden Verzögerungsvorgangs gewinnbare elektrische Energie vollständig oder zu einem größtmöglichen Anteil von dem Energiespeicher (3) aufgenommen werden kann, und
Aufladen oder Entladen des Energiespeichers (3) während des stationären Lade- oder Entladevorgangs bis zum Erreichen des ermittelten Zielladezustands (S1),
wobei der Normalwert für die Gesamtmasse des Fahrzeugs (1) das vom Hersteller angegebene Leergewicht des Fahrzeugs (1) plus ein vorgegebenes, zusätzliches Gewicht ist, und der Normalwert des Luftwiderstandbeiwerts der Luftwiderstandbeiwert ist, den das Fahrzeug (1) mit einer serienmäßigen Ausstattung aufweist.

2. Verfahren gemäß Anspruch 1, wobei
bei einem mit dem Fahrzeug (1) verbundenen, bremsbaren Anhänger während wenigstens einer Verzögerungsphase des Fahrzeugs (1) während der nächsten Fahrt
c1) zugunsten einer niedrigeren zugfahrzeugbasierten Energierückgewinnung der Bremskraftanteil des Anhängers erhöht wird; und/oder
c2) zugunsten einer erhöhten zugfahrzeugbasierten Energierückgewinnung der Bremskraftanteil des Anhängers vermindert wird.

3. Verfahren gemäß einem der vorhergehenden Ansprüche, wobei
- das Höhenprofil der berechneten, eingegebenen oder vorhergesagten Route; und
- der Standort des Fahrzeugs (1) zu Beginn der nächsten Fahrt für die Ermittlung des Zielladezustands berücksichtigt werden.

4. Verfahren gemäß Anspruch 3, wobei
für die Ermittlung des Zielladezustands weiter berücksichtigt wird/werden:
- die Straßenkategorie oder die Straßenkategorien entlang der berechneten, eingegebenen oder vorhergesagten Route;
- die gegebenen oder erwarteten Witterungsbedingungen während der nächsten Fahrt entlang der berechneten, eingegebenen oder vorhergesagten Route, insbesondere auch die gegebene oder erwartete Umgebungstemperatur;
- die gegebenen oder erwarteten Verkehrsbedingungen während der nächsten Fahrt entlang der berechneten, eingegebenen oder vorhergesagten Route;
- Fahrzeugeigenschaften, insbesondere ein präzidiertes Triebstrangverhalten und die Triebstranglebensdauer; und/oder
- ein Fahrstil des Fahrers und/oder Fahrerdaten.

5. Verfahren gemäß einem der vorhergehenden Ansprüche, wobei Daten zur Ermittlung der gegebenen Gesamtmasse des Fahrzeugs (1) einschließlich eines gegebenenfalls mit dem Fahrzeug (1) verbundenen Anhängers und/oder des gegebenen Luftwiderstandbeiwerts des Fahrzeugs (1)
- mittels fahrzeugseitiger Sensorik (5) erfasst, und/oder
- von einem Nutzer des Fahrzeugs (1) mittels eine Eingabe bei einer dem Fahrzeug (1) zugeordneten Eingabeeinrichtung (6) eingegeben werden.

6. Verfahren gemäß Anspruch 5, wobei
die gegebene Gesamtmasse des Fahrzeugs (1) einschließlich eines gegebenenfalls mit dem Fahrzeug (1) verbundenen Anhängers und/oder der gegebene Luftwiderstandbeiwert des Fahrzeugs (1)
- mittels eines Berechnungsmodells
ermittelt und/oder geschätzt wird/werden.

7. Verfahren gemäß einem der vorhergehenden Ansprüche,
wobei für den Fall, dass im Laufe der nächsten Fahrt eine Abweichung von der berechneten, eingegebenen oder vorhergesagten Route, eine Abweichung des tatsächlichen Energieverbrauchs von dem prädizierten Energieverbrauch entlang der Route, eine Änderung der durch den jeweiligen Mindestanteil an rekuperativer Verzögerung während eines jeden Verzögerungsvorgangs gewinnbaren elektrischen Energie, eine Änderung bei der gegebenen Gesamtmasse des Fahrzeugs (1) einschließlich eines gegebenenfalls mit dem Fahrzeug (1) verbundenen Anhängers und/oder des gegebenen Luftwiderstandbeiwerts des Fahrzeugs (1) festgestellt wird, für die Weiterfahrt eine Neuberechnung der Betriebsstrategie erfolgt, derart, dass bei den für die weiteren Routenabschnitte oder die möglichen weiteren Streckenabschnitte erforderlichen Verzögerungsvorgänge ein vorgebbarer Mindestanteil mittels rekuperativer Verzögerung möglich ist.

8. Elektrisch angetriebenes oder auch elektrisch antreibbares Fahrzeug (1) aufweisend:
- einen elektrischen Antriebsmotor (2) und einen dem Antriebsmotor (2) zugeordneten, wiederaufladbaren elektrischen Energiespeicher (3),
- ein Steuergerät (4) für den Energiespeicher (3), das wenigstens dazu eingerichtet ist, einen Ladezustand des Energiespeichers (3) zu ermitteln; und
- eine Navigationseinrichtung (7), mit der nach Eingabe eines Zielorts eine Route berechnet und/oder mit der der aktuelle Standort des Fahrzeugs (1) ermittelt werden kann,
**dadurch gekennzeichnet, dass** es
- weiter aufweist eine fahrzeugseitige Sensorik (5) zur Erfassung von Daten und/oder eine dem Fahrzeug (1) zugeordnete Eingabeeinrichtung (6) zur Eingabe von Daten durch einen Nutzer des Fahrzeugs (1) zur Ermittlung oder Abschätzung der gegebenen Gesamtmasse des Fahrzeugs (1) einschließlich eines gegebenenfalls mit dem Fahrzeug (1) verbundenen Anhängers und/oder des gegebenen Luftwiderstandbeiwerts des Fahrzeugs (1), und eine Recheneinrichtung (8), die dazu eingerichtet ist, für eine als nächste Fahrt berechnete, eingegebene oder vorhergesagte Route für den Energiespeicher (3) einen Zielladezustand zu berechnen, mit dem/der bei den entlang der berechneten, eingegebenen oder vorhergesagten Route auftretenden Verzögerungsvorgängen jeweils ein vorgebbarer Mindestanteil an rekuperativer Verzögerung möglich ist, und
- dazu eingerichtet ist, eines der Verfahren gemäß einem der Ansprüche 1 bis 7 durchführen zu können.

## Claims

1. Method for operating an electrically driven or electrically drivable vehicle (1) having a rechargeable electric energy storage (3) assigned to an electric drive motor (2) of the vehicle (1), wherein a target charging state is determined (S6) for the energy storage (3) for a route that is calculated, entered or predicted for a next planned journey, in which a predeterminable minimum proportion is enabled by means of recuperative deceleration during deceleration processes arising along this route, comprising:
determining a target charging state for the energy storage (3) for a stationary charging or discharging process of the energy storage (3) taking place directly before the beginning of the next journey, taking into account a calculated, entered or predicted route to be travelled as the next journey as well as, given at the start of the next journey, a total mass of the vehicle (1) deviating from a predetermined normal value, including a trailer optionally connected to the vehicle (1) and/or the given aerodynamic drag coefficient of the vehicle (1) deviating from a predetermined normal value, such that, along this route, the electric energy recoverable by the respective predetermined minimum proportion of recuperative deceleration during each deceleration process, can be completely, or to the largest possible extent, accepted by the energy storage (3), and
charging or discharging of the energy storage (3) during the stationary charging or discharging process in order to achieve the determined target charging state (SI),
wherein the normal value for the total mass of the vehicle (1) is the empty weight of the vehicle (1) specified by the manufacturer plus a predetermined additional weight, and the normal value of the aerodynamic drag coefficient is the value of the aerodynamic drag coefficient that the vehicle (1) exhibits with standard features.

2. Method according to claim 1,
wherein for a trailer that is able to be braked, connected with the vehicle (1) during at least one deceleration phase of the vehicle (1) during the next journey
c1) the proportion of the braking force of the trailer is increased to allow a lower towing-vehicle based energy recovery; and/or
c2) the proportion of the braking force of the trailer is reduced to allow a higher towing-vehicle based energy recovery.

3. Method according to one of the preceding claims, wherein
- the height profile of the calculated, entered or predicted route; and
- the location of the vehicle (1) at the start of the next journey are taken into account for the determination of the target charging state.

4. Method according to claim 3, wherein
further taken into account for the determination of the target charging state is/are:
- the road category or road categories along the calculated, entered or predicted route;
- the given or expected weather conditions during the next journey along the calculated, entered or predicted route, in particular also the given or expected ambient temperature;
- the given or expected traffic conditions during the next journey along the calculated, entered or predicted route;
- vehicle characteristics, in particular a specified powertrain behaviour and the powertrain life; and/or
- a driving style of the driver and/or driver data.

5. Method according to one of the preceding claims, wherein
data for determining the given total mass of the vehicle (1) including a trailer optionally connected to the vehicle (1) and/or the given aerodynamic drag coefficient of the vehicle (1)
- detected by means of on-board sensors (5), and/or
- are entered by a user of the vehicle (1) by means of an input from an input device (6) assigned to the vehicle (1).

6. Method according to claim 5, wherein
the given total mass of the vehicle (1) including a trailer optionally connected to the vehicle (1) and/or the given aerodynamic drag coefficient of the vehicle (1)
- is/are determined by means of a calculation model and/or estimated.

7. Method according to one of the preceding claims,
wherein in the case that, in the course of the next journey, a deviation from the calculated, entered or predicted route, a deviation of the actual energy consumption from the predicted energy consumption along the route, a change in the electric energy recoverable through the respective minimum proportion of recuperative deceleration during each deceleration process, a change in the given total mass of the vehicle (1) including that of a trailer optionally connected to the vehicle (1) and/or the given aerodynamic drag coefficient of the vehicle (1) is found, for the continuation of the journey a new calculation of the operating strategy is implemented, such that during the deceleration processes required for the further route sections or the possible further road sections, a predeterminable minimum proportion is possible by means of recuperative deceleration.

8. Electrically driven or also electrically drivable vehicle (1) having:
- an electric drive motor (2) and a rechargeable electric energy storage (3) assigned to the drive motor (2),
- a control device (4) for the energy storage (3), that is configured to determine at least the charging state of the energy storage (3); and
- a navigation unit (7), with which, after entering a destination, a route can be calculated and/or determined using the current location of the vehicle (1), **characterised in that**
- it further has on-board sensors (5) for acquiring data and/or an input device (6) assigned to the vehicle (1) for input of data by a user of the vehicle (1) in order to determine or estimate the given total mass of the vehicle (1) including a trailer optionally connected with the vehicle (1) and/or the given aerodynamic drag coefficient of the vehicle (1), and a calculation device (8), which is configured to calculate a target charging state for the energy storage (3) for the next calculated, entered or predicted route, in which, during deceleration processes arising along the calculated, entered or predicted route, a predeterminable minimum proportion of recuperative deceleration is possible, and
- is configured to be able to execute one of the methods according to one of claims 1 to 7.

## Revendications

1. Procédé de fonctionnement d'un véhicule (1) commandé électriquement ou également commandable électriquement avec un accumulateur d'énergie (3) électrique rechargeable affecté à un moteur d'entraînement électrique (2) du véhicule (1), dans lequel on détermine (S6) pour une route calculée, introduite ou prédite prévue comme futur trajet un état de recharge cible pour l'accumulateur d'énergie (3), qui permet, lors d'opérations de décélération se produisant le long de cette route, une fraction minimale prédéterminable par une décélération de récupération, comprenant :
la détermination d'un état de recharge cible pour l'accumulateur d'énergie (3) pour une opération de recharge et de déchargement stationnaire de l'accumulateur d'énergie (3) ayant lieu directement avant le début du futur trajet en tenant compte d'une route calculée, introduite ou prédite à considérer comme futur trajet ainsi que de la masse totale du véhicule (1) donnée au départ du futur trajet et s'écartant d'une valeur normale préétablie, incluant une remorque reliée éventuellement au véhicule (1) et/ou du coefficient donné de résistance à l'air du véhicule (1) s'écartant d'une valeur normale préétablie de sorte que, le long de cette route, l'énergie électrique récupérable au cours d'une opération de décélération respective du fait de la fraction minimale respectivement préétablie de décélération de récupération puisse être recueillie complètement ou en fraction la plus grande possible de l'accumulateur d'énergie (3), et
le chargement ou le déchargement de l'accumulateur d'énergie (3) au cours de l'opération de recharge ou de déchargement stationnaire jusqu'à atteindre l'état de recharge cible déterminé (S1),
dans lequel la valeur normale pour la masse totale du véhicule (1) est le poids à vide du véhicule (1) indiqué par le fabricant plus un poids supplémentaire préétabli et la valeur normale du coefficient de résistance à l'air est le coefficient de résistance à l'air que présente le véhicule (1) avec un équipement standard.

2. Procédé selon la revendication 1, dans lequel,
dans le cas d'une remorque freinable reliée au véhicule (1) pendant au moins une phase de décélération du véhicule (1) au cours du trajet futur,
c1) la fraction de force de freinage de la remorque est augmentée au profit d'une récupération d'énergie plus faible basée sur le véhicule de traction ; et/ou
c2) la fraction de force de freinage de la remorque est réduite au profit d'une récupération d'énergie plus élevée basée sur le véhicule de traction.

3. Procédé selon l'une quelconque des revendications précédentes, dans lequel :
- le profil en hauteur de la route calculée, introduite ou prédite ; et
- la position du véhicule (1) au début du trajet futur sont pris en compte pour déterminer l'état de recharge cible.

4. Procédé selon la revendication 3, dans lequel
pour déterminer l'état de recharge cible, on considère en outre :
- la catégorie routière ou les catégories routières le long de la route calculée, introduite ou prédite ;
- les conditions climatiques données ou attendues au cours du trajet futur le long de la route calculée, introduite ou prédite, en particulier aussi la température ambiante donnée ou attendue ;
- les conditions de trafic données ou attendues au cours du trajet futur le long de la route calculée, introduite ou prédite ;
- les propriétés du véhicule, en particulier un comportement du train d'entraînement directeur et la durée de vie du train d'entraînement ; et/ou
- un style de conduite du chauffeur et/ou des données sur le chauffeur.

5. Procédé selon l'une quelconque des revendications précédentes, dans lequel
les données de détermination de la masse totale donnée du véhicule (1) incluant une remorque éventuellement reliée au véhicule (1) et/ou du coefficient donné de résistance à l'air du véhicule (1)
- sont déterminées au moyen de capteurs côté véhicule (5) et/ou
- sont introduites par un utilisateur du véhicule (1) par introduction dans un dispositif d'introduction (6) affecté au véhicule (1).

6. Procédé selon la revendication 5, dans lequel
la masse totale donnée du véhicule (1) incluant une remorque éventuellement reliée au véhicule (1) et/ou du coefficient donné de résistance de l'air du véhicule (1)
- est ou sont déterminés et/ou estimés au moyen d'un modèle de calcul.

7. Procédé selon l'une quelconque des revendications précédentes,
dans lequel, dans le cas où l'on constate au cours du trajet futur un écart de la route calculée, introduite ou prédite, un écart de la consommation d'énergie réelle vis-à-vis de la consommation d'énergie prédite le long de la route, une modification de l'énergie électrique récupérable au cours d'une opération de décélération respective en raison de la fraction minimale respective de décélération de récupération, une modification dans la masse totale donnée du véhicule (1) incluant une remorque éventuellement reliée au véhicule (1) et/ou du coefficient donné de résistance de l'air du véhicule (1), il se produit pour la suite du trajet un nouveau calcul de la stratégie de fonctionnement de sorte que, dans les opérations de décélération nécessaires pour les autres sections de route ou les autres sections de tronçons possibles, une fraction minimale prédéfinissable soit possible au moyen d'une décélération de récupération.

8. Véhicule (1) commandé électriquement ou également commandable électriquement présentant :
- un moteur d'entraînement électrique (2) et un accumulateur d'énergie (3) électrique rechargeable affecté au moteur d'entraînement (2),
- un appareil de commande (4) pour l'accumulateur d'énergie (3) qui est au moins conçu de manière à permettre un état de recharge de l'accumulateur d'énergie (3) ; et
- un dispositif de navigation (7) avec lequel, après l'introduction d'un lieu cible, une route peut être calculée et/ou déterminée avec l'emplacement réel du véhicule (1),
**caractérisé en ce que** :
- il présente en outre un capteur côté véhicule (5) pour détecter des données et/ou un dispositif d'introduction (6) affecté au véhicule (1) pour introduire des données par un utilisateur du véhicule (1) afin de déterminer ou d'évaluer la masse totale donnée du véhicule (1) incluant une remorque reliée éventuellement au véhicule (1) et/ou du coefficient donné de résistance à l'air du véhicule (1), et un dispositif informatique (8) qui est conçu pour calculer pour une route calculée, introduite ou prédite comme trajet futur pour l'accumulateur d'énergie (3) un état de recharge cible, avec lequel, lors des opérations de décélération se produisant le long de la route calculée, introduite ou prédite, respectivement une fraction minimale prédéfinissable de décélération de récupération est possible, et
- est conçu pour pouvoir réaliser le procédé selon l'une quelconque des revendications 1 à 7.
